# FASCICULE DE BREVET EUROPEEN

(11) **EP 1 849 985 B1**
(45) Date de publication et mention de la délivrance du brevet: **17.06.2009**
(21) Numéro de dépôt: 07290517.7
(22) Date de dépôt: 25.04.2007
(51) Int. Cl.: F02K 1/40, F02K 1/28, B64D 33/04

(54) **Ensemble d'échappement des gaz de propulsion à coudage vrillé dans un aéronef**
Anordnung zum Ausstoßen von Treibgasen mit verdrehter Biegung in einem Luftfahrzeug
Twisted elbow-shaped propelling gas exhaust assembly in an aircraft

(30) Priorité: 28.04.2006 FR 0651545
(43) Date de publication de la demande: 31.10.2007
(73) Titulaire: SNECMA, 75015 Paris (FR)
(72) Inventeur: Daris, Thomas, 75012 Paris (FR); Page, Alain Pierre, 91230 Montgeron (FR); Prouteau, Jackie Raymond Julien, 94440 Villecresnes (FR); Brunet, Edgar, 92200 Neuilly sur Seine (FR)
(74) Mandataire: David, Daniel

(56) Documents cités:
- WO-A-00/40851
- US-A- 3 631 678
- US-A- 5 170 964
- US-A- 6 112 513
- US-A1- 2002 189 232

## Description

L'invention se rapporte au domaine de la propulsion des aéronefs par éjection de flux gazeux et concerne l'ensemble d'échappement en aval du générateur de gaz jusqu'à la tuyère.

Pour des avions propulsés par des turboréacteurs, avec pilote ou sans pilote, les drones, à applications militaires, un objectif est la furtivité.

La furtivité est définie notamment par rapport à deux paramètres : la surface équivalent radar (SER) et la signature infrarouge (SIR). La SER est la surface susceptible d'apparaître sur un radar, compte tenu de la géométrie de l'aéronef. La SIR est la signature en chaleur que laisse l'aéronef, notamment au niveau de ses tuyères d'éjection.

Pour réduire cette signature en chaleur, voire la supprimer, il est connu de masquer le rayonnement infrarouge émis par les gaz chauds issus du générateur de gaz. On connaît par exemple le brevet US 3693880 qui décrit un dispositif de ce type. Il comprend un écran placé dans le canal d'échappement des gaz tout en étant espacé des parois de ce dernier et maintenu par des bras radiaux. Il a une forme aérodynamique guidant au mieux les gaz le long de son profil et sa surface est refroidie par de l'air plus froid acheminé par les bras radiaux. Le conduit à section circulaire devient annulaire entre l'écran et la paroi du conduit. L'écoulement redevient à section circulaire en aval de l'écran pour être évacué par une tuyère. Le diamètre du conduit s'élargit à cet endroit et suit un profil parallèle à celui de l'écran pour conserver une ouverture suffisante. Le diamètre maximal de l'écran est suffisant pour masquer la turbine en vue depuis l'arrière. En outre la partie aval de l'écran est à double paroi parcourue par l'air de refroidissement pour en éviter tout échauffement.

Un autre système d'échappement furtif est décrit dans le document US 3631678.

Le présent déposant a développé par ailleurs une tuyère double, dite bifide, dans laquelle le flux de gaz issu du moyen de génération de gaz est divisé en deux flux et guidé jusque vers deux tuyères. Les deux flux d'égale importance sont éjectés en parallèle dans l'axe de la poussée. L'avantage de cette disposition est de permettre le guidage de l'aéronef, notamment en lacet par un contrôle des deux flux soit par orientation de leur vecteur poussée soit par les débits. En étant écartés l'un de l'autre, ils se retrouvent aussi décalés par rapport à l'axe du générateur. De cette façon, dans le cas où le moyen le générateur comprend une turbine, celle-ci est susceptible de ne pas être visible de l'arrière à travers l'ouverture des tuyères La signature infrarouge est donc faible..

La présente invention vise un dispositif d'échappement dont la signature infrarouge est encore réduite par rapport à la solution précédente. L'invention parvient à réaliser cet objectif avec un ensemble d'échappement des gaz de propulsion, dans un aéronef propulsé par des gaz chauds produits dans l'axe de celui-ci par un générateur de gaz, comprenant un conduit et une tuyère, le dit conduit comprenant un premier élément de conduit cylindrique recevant les gaz et communiquant en aval avec deux deuxièmes éléments de conduit dont les directions sont divergentes dans un premier plan, chacun des deuxièmes éléments de conduit communiquant vers l'aval avec un troisième élément de conduit qui débouche dans une demi tuyère axiale d'éjection des gaz, caractérisé par le fait qu'au moins l'un des troisièmes conduits forme un coude défini par une première partie guidant le flux gazeux dans une direction radiale s'éloignant de l'axe et une deuxième partie en aval de la première guidant le flux gazeux dans une direction radiale vers l'axe, de telle manière que les zones chaudes à l'intérieur du conduit en amont de l'ensemble ne soient pas visibles depuis l'arrière.

Par demi tuyère, on comprend dans la présente demande une tuyère d'éjection des gaz qui reçoit une partie du flux principal en aval de la turbine. Ce terme n'est pas associé à une forme particulière.

Conformément à une autre caractéristique au moins l'un des troisièmes éléments de conduit forme un coude, de préférence dans un deuxième plan éventuellement différent du premier plan. Dans ce dernier cas le deuxième plan est de préférence perpendiculaire au premier plan. Selon un mode de réalisation la section transversale des troisièmes éléments de conduit est de forme allongée dans la direction horizontale.

Dans la présente demande, le terme coude est compris de la façon suivante. L'élément de conduit comprend une première partie guidant le flux gazeux dans une direction radiale s'éloignant de l'axe et une deuxième partie en aval de la première guidant le flux gazeux dans une direction radiale vers l'axe. En aval du coude le flux est ramené dans l'axe.

Plus particulièrement les deux troisièmes éléments de conduit forment chacun un coude, les coudes étant de directions opposées l'une à l'autre, notamment dans le plan vertical l'un vers le haut l'autre vers le bas et les deux demi tuyères sont dans un même plan parallèle au premier.

Selon un mode de réalisation particulier, les deux deuxièmes éléments de conduit sont à entrées en forme de demi cylindres avec une séparation parallèle au dit premier plan. D'autres configurations pour cette partie de l'échappement sont cependant possibles.

On a constaté avec surprise qu'en coudant le flux gazeux de cette façon on pouvait masquer efficacement non seulement le disque de turbine mais aussi les parties les plus chaudes en aval de celle-ci par homogénéisation des températures. Par ailleurs ce concept permet aussi de concevoir une zone de transition minimisant les pertes de charge aérodynamique tout en favorisant le mélange des gaz avant éjection.

La présente invention s'applique en particulier au cas où le générateur de gaz est un turboréacteur à double flux avec un flux primaire central chaud issu de la turbine, entouré d'un flux secondaire issu directement de la soufflante donc à une température basse. Dans un moteur de ce type on a constaté que l'on obtenait une répartition des températures tout à fait favorable en ce qui concerne la signature infrarouge. Par la séparation en deux flux et le vrillage des deux conduits, les parties du flux gazeux situées à la périphérie se retrouvent du côté des parois situées près de l'axe moteur. Dans la mesure où les demi tuyères présentent des cloisons verticales situées près de l'axe allongées par rapport aux cloisons éloignées de l'axe, et donc particulièrement vulnérables à la vue directe par les côtés et l'arrière; ces dernières profitent du balayage par les parties de flux gazeux à température plus basse. Leur signature infrarouge en est réduite.

L'invention porte également sur la capacité de guidage fournie par ce type d'échappement. On a appliqué la solution décrite dans la demande de brevet déposée par le présent demandeur sous le numéro FR 05 51 857. En effet dans le cas d'une tuyère telle que destinée à équiper un drone militaire, on associe un objectif de discrétion SIR et SER au besoin de poussée vectorielle. On est conduit à concevoir des tuyères bidimensionnelles très aplaties, avec un allongement de l'ordre de 5 pour les discrétions SIR et SER et avec une forme extérieure pointue pour la discrétion en SER.

La présente invention a également pour objectif la réalisation d'un dispositif de pilotage d'un aéronef, notamment en lacet, efficace, associé à une maîtrise du débit moteur et applicable aux aéronefs mono moteur ou bi moteurs et en particulier aux drones.

Ce dispositif doit être capable d'assurer en continu une vectorisation de faible amplitude sans entraîner une pénalisation des performances du générateur de gaz.

Il doit être capable de fournir une poussée vectorielle importante pour les besoins de pilotage de l'aéronef.

On parvient à réaliser ces objectifs avec l'ensemble d'échappement présenté ci-dessus, conformé de manière à diviser un flux principal de gaz de propulsion en un premier et un second flux pour une éjection dans une première et une seconde demi tuyères et comportant au moins l'un des deux moyens de pilotage suivants : moyen de répartition du flux principal dans chacune des deux demi tuyères et moyen d'orientation du vecteur de poussée produite par chacune des deux demi tuyères.

Avantageusement, au moins l'un des dits deux moyens, de préférence les deux, sont à injection fluidique et de préférence encore l'ensemble d'échappement comporte les dits deux moyens. Cette solution présente l'avantage d'être simple et de fonctionner avec un nombre réduit de dispositifs d'injection fluidique, assurant une fiabilité élevée et un coût faible.

En premier lieu, les dites demi tuyères sont disposées pour une orientation du vecteur poussée en lacet. On palie ainsi l'absence de dérive.

Selon une variante, les dites demi tuyères sont disposées pour un pilotage en tangage ou en roulis ou encore la tuyère comprend deux paires de demi tuyères l'une, par exemple, pour l'orientation en lacet l'autre pour l'orientation en tangage.

Conformément à une autre caractéristique, le moyen de pilotage de la répartition des flux comprend des moyens d'injection de fluide au col de chacune des demi tuyères. Plus précisément, le générateur de gaz étant un turboréacteur, les moyens d'injection fluidiques sont alimentés par de l'air pouvant être prélevé au compresseur du générateur. Cette solution est particulièrement avantageuse car elle permet un fonctionnement équilibré dans toutes les phases de vol. Notamment on prévoit un procédé de fonctionnement de la tuyère selon lequel on prélève en continu de l'air au compresseur du générateur.

Conformément à une variante de réalisation, le flux principal est généré par deux générateurs de gaz. Dans ce cas l'ensemble d'échappement comprend de préférence seulement un moyen d'orientation du vecteur de poussée produit par chacune des deux demi tuyères.

L'invention porte également sur une turbomachine comportant un ensemble d'échappement tel que décrit précédement.

On décrit maintenant l'invention plus en détail en référence aux dessins annexés sur lesquels,
la figure 1 montre, en vue de dessus, un exemple d'aéronef auquel s'applique l'invention ;
la figure 2 montre en vue de dessus une tuyère de type bifide ;
la figure 3 montre en vue de côté un ensemble d'échappement conforme à l'invention ;
les figures 4 à 6 montrent l'ensemble de la figure 3 vu respectivement de face, arrière et en perspective de trois quart arrière ;
la figure 7 est une représentation schématique de la disposition des moyens de pilotage de l'invention dans une demi tuyère ;
la figure 8 illustre le fonctionnement des moyens de pilotage disposés au col ;
la figure 9 illustre le fonctionnement des moyens de pilotage disposés dans le divergent des demi tuyères.

L'aéronef 1 représenté sur la figure est un exemple non limitatif. Il a un nez 2 deux ailes 3 et 4 et est propulsé par un ou deux turboréacteurs non visibles. Il est conformé de manière à présenter des SER et SIR aussi faibles que possible. Sa partie arrière en particulier ne comprend pas de dérive verticale et se termine par une pointe 5 avec un angle au sommet adapté, par exemple de 40°, pour rejeter les ondes radars vers l'infini. L'ensemble d'échappement 10 tire partie de cette contrainte en étant bifide. Elle répartit le flux principal issu du canal 12 en entrée en deux flux dans deux canaux symétriques 12A et 12B qui se terminent par deux demi tuyères 14 et 16 à section rectangulaire. Les canaux 12, 12A et 12B ont une forme adaptée pour assurer la séparation de l'écoulement en deux flux mais aussi la transition d'une forme cylindrique à section circulaire ou sensiblement circulaire à une forme à section rectangulaire. Le cas échéant, les canaux comprennent un coude supplémentaire pour assurer le masquage de la turbine. Comme on la voit sur les figures ce masquage est déjà assuré au moins en partie par l'écartement entre les demi tuyères 14 et 16.

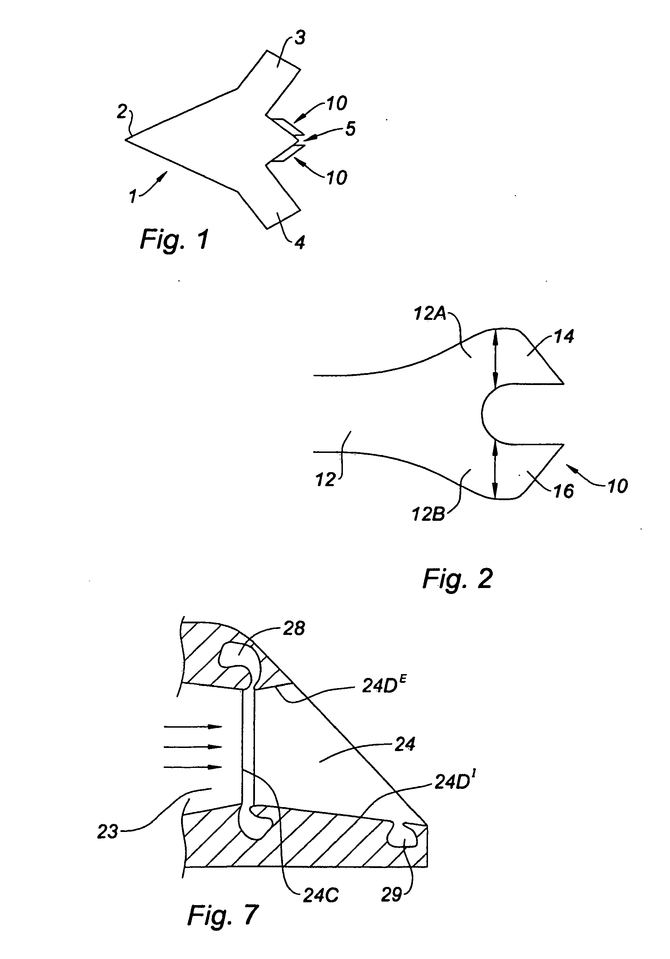

Selon la présente demande, on perfectionne la forme de l'ensemble d'échappement de manière à assurer le masquage du bloc de turbine quelle que soit la position d'un observateur arrière. Comme on le voit sur la figure 2, une partie de la tuyère bifide, en raison de son plan d'éjection en biseau, est visible dès les visées latérales. Il s'agit donc d'en réduire aussi la signature.

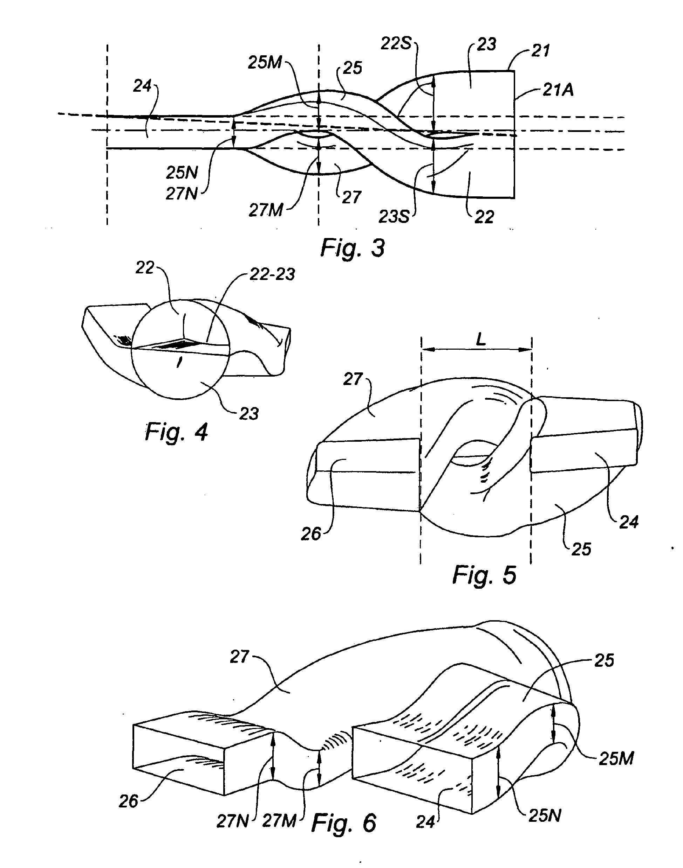

En se reportant aux figures 3 à 7, on voit la géométrie de l'ensemble d'échappement 20 conforme à l'invention.

Cet ensemble comprend un conduit constitué d'éléments de conduit que l'on peut distinguer de la façon suivante.

Un premier élément tubulaire cylindrique 21 à l'entrée, avec un plan d'entrée 21A recevant les gaz du générateur de gaz, de la turbine dans le cas d'un moteur à turbine à gaz. La présente invention s'applique en priorité au cas d'une propulsion par un turboréacteur à double flux. En entrée le flux primaire chaud est central et le flux secondaire frais à la périphérie.

Cet élément de conduit 21 débouche dans deux deuxièmes éléments de conduit 22 et 23 superposés de forme semi cylindrique avec un plan de séparation 22-23 horizontal que l'on voit bien sur la figure 4. Ces deux éléments 22 et 23 sont orientés selon deux directions divergentes dans le plan parallèle à leur plan de séparation 22-23, dit premier plan. Les deux flux gazeux s'écartent l'un de l'autre sur cette portion. Ils se prolongent sur une longueur axiale suffisante jusqu'à ce que leurs plans de sortie 22s et 23s ne se chevauchent pas. Les plans de sortie 22s et 23s sont sensiblement côte à côte. Chaque élément 22 et 23 débouche ainsi dans un troisième élément de conduit, 25 et 27 respectivement, disposés en parallèle. Les deux éléments de conduit 25 et 27 sont orientés sensiblement selon l'axe XX du moteur. Ces deux troisièmes éléments de conduit 25 et 27 débouchent chacun dans une demi tuyère, 24 et 26 respectivement. On désigne par demi tuyères les deux demi tuyères qui ensemble guident vers l'extérieur le flux issu du générateur de gaz.

En se déplaçant axialement vers l'aval depuis les plans transversaux 22s et 23s, on observe que les deux élément de conduit 25 et 27 suivent des directions dans le plan vertical, dit deuxième plan, opposées en se croisant et s'écartent l'un de l'autre jusqu'à un écartement maximal en 25M et 27M, puis se rapprochent l'un de l'autre de nouveau jusqu'en 25N et 27N. En cette positon, les deux éléments de conduit 25 et 27 sont dans le même plan horizontal à la hauteur de l'axe XX du moteur. Ce plan est confondu ou parallèle au premier plan 22-23.

Chaque élément 25 et 27 débouche dans une demi tuyère, 24 et 26 respectivement. Comme on le voit sur la figure 5, les deux tuyères sont distantes l'une de l'autre dans le plan horizontal, premier plan. Ils sont séparés d'une distance Lséparation.

On observe que selon ce mode de réalisation, le premier plan est horizontal et le second plan est vertical ; on comprend que les deux plans peuvent pivoter autour de l'axe XX sans sortir du cadre de l'invention, le premier plan devenir vertical et le second plan devenir horizontal.

Les dimensions caractéristiques de cet ensemble d'échappement sont les suivantes :
- Lcoude est la longueur de l'ensemble depuis le plan d'entrée 21A jusqu'au coude c'est-à-dire le plans transversal 25M, 27M.
- Lcanal est la longueur depuis le plan d'entrée 21A jusqu'au plan de sortie de la tuyère.
- Hcoude est la hauteur du coude par rapport à la paroi inférieure de la sortie de tuyère ; c'est-à-dire la hauteur de la paroi interne en 25N ou 27N.
- Hsortie est la hauteur de la tuyère en sortie.

L'ensemble d'échappement présente au moins l'une des relations entre ces paramètres, suivantes.
- Le rapport Lcoude/Lcanal est compris entre 0,5 et 0,7 ;
- Hcoude/Hsortie >= (Lcoude/Lcanal +1) ;
- Lséparation / Lcanal compris entre 0,3 et 0,5.

Comme cela est illustré par les droites D1 et D2, une telle géométrie permet un masquage efficace des zones chaudes du moteur qui se retrouvent à l'intérieur des limites de visibilité définie par ces droites. En outre, dans le cas où le générateur de gaz est un turboréacteur à double flux avec un flux secondaire froid, cette géométrie permet d'amener progressivement l'air frais issu de l'écoulement secondaire sur les parties de la tuyère visibles pour en réduire le signal infrarouge.

On décrit maintenant le moyen de guidage en lacet de l'aéronef en référence aux figures 7 à 9. Dans cet exemple chacune des demi tuyères est constituée d'un col rectangulaire, 24C et 26C respectivement, d'allongement horizontal, rapport largeur/hauteur, élevé, comme on le voit sur la figure 7. L'allongement des tuyères peut être de 2,5. En aval du col, le divergent est formé des deux parois verticales. Il est court du côté externe 24D^{E} et 26D^{E}. Les parois verticales du côté interne 24D^{I} et 26D^{I} sont plus longues. Cela donne une forme en biseau du bord aval des tuyères, 24 et 26. Les parois supérieures et inférieures sont soit parallèles entre elles soit divergentes. On observe par rapport à l'agencement de l'ensemble d'échappement décrit plus haut que les parois verticales du côté interne sont, grâce à l'invention, balayées par du gaz plus froid issu du flux secondaire du turboréacteur à double flux formant le générateur de gaz. Leur signature infrarouge est réduite.

L'ensemble est de préférence optimisé pour assurer, dans les cas sans injection et sans vectorisation, une poussée transversale de chaque demi tuyère minimale. En effet celle-ci se traduit par une perte de poussée axiale qu'il faut réduire à un minimum. La poussée latérale globale reste nulle en raison de la symétrie du système.

Conformément à une caractéristique de l'invention pour assurer le guidage de l'aéronef 1 sans-empennage, on prévoit des moyens de pilotage par lesquels on agit sur les deux flux.

La tuyère convergente divergente, 24 par exemple, comprend le col 24C et en aval les deux parois divergentes 24D^{I} et 24D^{E}. La tuyère comprend ici un injecteur de fluide 28 disposé sur une paroi au niveau du col et un injecteur de fluide 29 situé sur la paroi 24D^{I} du divergent. L'injecteur est de préférence situé près de l'extrémité du divergent.

De façon symétrique la demi tuyère 26 est équipée d'un injecteur de fluide 28 au col 26C et d'un injecteur de fluide 29 sur la paroi de divergent 26D^{I}

Les injecteurs 28 et 29 sont alimentés avantageusement par de l'air prélevé au compresseur du turboréacteur qui fournit le flux principal, le cas échéant.

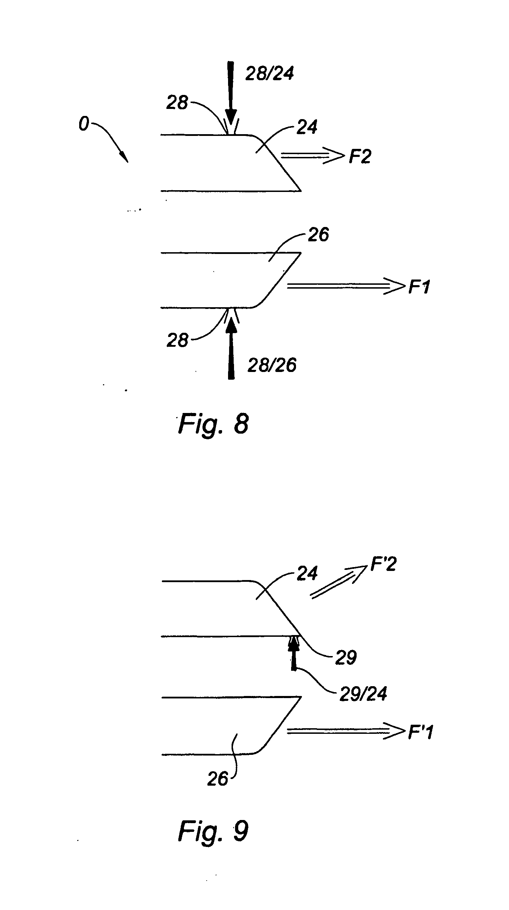

Le fonctionnement est le suivant. On a représenté sur la figure 8 par des flèches 28/24 et 28/26 les injections d'air par les injecteurs 28. Le moment de lacet est créé par le pilotage de la répartition du débit dans chacune des deux demi tuyères 24 et 26 au moyen des injections de fluide aux deux cols. La valeur du débit est illustrée par la longueur de la flèche, et ici une flèche est plus longue que l'autre. Selon cet exemple la demi tuyère 24 reçoit un fort débit injecté 28/24, et par conséquent subit une importante restriction de la section efficace au col. Inversement la demi tuyère 26 reçoit peu ou pas de débit au col. Il en résulte la création d'un différentiel de poussée axiale. La poussée F1 sur la demi tuyère 26 est plus grande que la poussée F2 sur la demi tuyère 24. Il en résulte un moment de lacet.

On observe cependant qu'une obstruction subite de la tuyère créerait instantanément une augmentation de pression dans le canal et un risque de pompage du compresseur. Conformément à un mode préféré de fonctionnement, on crée une injection permanente nominale. Elle est réalisée à iso débit prélevé de telle sorte que le générateur ne subit pas de variation soudaine au cours de la mission tout en régulant la tuyère à iso section efficace au col totale. Le cycle thermodynamique du moteur est directement optimisé sous cette contrainte de prélèvement constant. De cette façon, le système de régulation de l'air prélevé fonctionne de façon continue et ne connaît pas de phase transitoire de démarrage.

Ainsi ce mode de fonctionnement conforme à l'invention fournit avec un impact faible sur les performances du moteur, un poussée vectorielle qui permet de compenser l'absence d'empennage cellule, notamment pour les régimes de croisières ou transitoires lents.

On décrit maintenant le fonctionnement du dispositif d'injection situé dans le divergent des tuyères 24 et 26 en relation avec la figure 9.

Les injecteurs 29 sont dans ce mode de réalisation disposés de préférence en extrémité de la paroi longue de divergent. En injectant un fluide dans la tuyère 24, dont la direction est représentée par la flèche 29/24, on induit une déviation du vecteur de poussée produite par la tuyère et représenté par la flèche F'2. La poussée F' 1 fournie par la demi tuyère 26 reste axiale puisque rien ne vient perturber sa direction. Il s'ensuit la création d'un moment de lacet par rapport au centre de gravité de l'avion. Ce mode de fonctionnement fournit une poussée vectorielle importante pour assurer le pilotage de l'aéronef, au détriment cependant des performances du générateur. Cette détérioration est toutefois maîtrisée.

On a décrit un mode de réalisation de l'invention. Cependant de nombreuses variantes sont possibles sans sortir du cadre de l'invention. Par exemple on a montré un canal alimenté par un seul générateur de gaz. Dans le cas d'un aéronef bimoteur les deux demi flux d'échappement sont générés par deux moteurs distincts dont la régulation est synchronisée. De préférence on utilise les seuls injecteurs dans le divergent.

Des variantes sur la disposition et le fonctionnement des moyens de pilotage, comprennent la présence d'un seul moyen de pilotage. Il est possible de le faire fonctionner en même temps que l'autre moyen ou séparément.

Selon un mode de réalisation non représenté, les tuyères peuvent être de type fluidique avec éjecteur, c'est-à-dire un flux secondaire débouchant dans ou en aval du canal principal.

Les moyens de pilotage selon l'invention peuvent être combinés en partie avec des moyens mécaniques d'orientation des flux. Le cas échéant les moyens de pilotage peuvent être entièrement mécaniques.

## Revendications

1. Ensemble d'échappement des gaz de propulsion, dans un aéronef propulsé par des gaz chauds produits dans l'axe de celui-ci par un générateur de gaz, comprenant un conduit et une tuyère, le dit conduit comprenant un premier élément de conduit cylindrique (21) recevant les gaz et communiquant en aval avec deux deuxièmes éléments de conduit (22, 23) dont les directions sont divergentes dans un premier plan, chacun des deuxièmes éléments de conduit communiquant vers l'aval avec un troisième élément de conduit (25, 27) qui débouche dans une demi tuyère (24, 26) axiale d'éjection des gaz **caractérisé par le fait qu'**au moins l'un des troisièmes conduits (25, 27) forme un coude défini par une première partie guidant le flux gazeux dans une direction radiale s'éloignant de l'axe et une deuxième partie en aval de la première guidant le flux gazeux dans une direction radiale vers l'axe, de telle manière que les zones chaudes à l'intérieur du conduit en amont de l'ensemble ne soient pas visibles depuis l'arrière.

2. Ensemble selon la revendication 1 dont au moins l'un des troisièmes conduits (25, 27) forme un coude dans un deuxième plan.

3. Ensemble selon la revendication 2 dont le deuxième plan est différent du premier plan, notamment perpendiculaire à celui-ci.

4. Ensemble selon la revendication 2 ou 3 dont les deux troisièmes conduits (25, 27) forment chacun un coude, les coudes étant de directions opposées l'une à l'autre, notamment dans le plan vertical l'un vers le haut l'autre vers le bas.

5. Ensemble selon l'une des revendications 1 à 4 dont la section transversale des troisièmes éléments de conduit est de forme allongée dans la direction horizontale.

6. Ensemble selon l'une des revendications précédentes dont les axes des deux demi tuyères (24, 26) sont dans un même plan parallèle au premier plan.

7. Ensemble selon l'une des revendications précédentes dont les deux deuxièmes éléments de conduits (22, 23) sont à entrées en forme de demi cylindres avec une séparation parallèle au dit premier plan

8. Ensemble selon l'une des revendications précédentes conformé de manière à diviser un flux principal de gaz de propulsion en un premier et un second flux pour une éjection dans une première et une seconde demi tuyères et comportant au moins l'un des deux moyens de pilotage suivants : moyen de répartition du flux principal dans chacune des deux demi tuyères et moyen d'orientation du vecteur de poussée produite par chacune des deux demi tuyères.

9. Ensemble selon la revendication précédente dont les dits deux moyens sont à injection fluidique (28, 29) ou mécaniques.

10. Ensemble selon l'une des revendications 8 et 9 dont les dites demi tuyères sont disposées pour une orientation du vecteur poussée en lacet.

11. Ensemble selon l'une des revendications 8 et 9 dont les dites demi tuyères sont agencées pour un pilotage en tangage ou en roulis.

12. Ensemble selon les revendications 10 et 11 comprenant deux paires de demi tuyères notamment l'une pour l'orientation en lacet l'autre pour l'orientation en tangage.

13. Ensemble selon la revendication 8 dont le moyen de pilotage de la répartition des flux comprend des moyens (28) d'injection de fluide au col de chacune des demi tuyères.

14. Ensemble selon la revendication précédente, le générateur de gaz étant un turboréacteur, dont les moyens d'injection fluidiques sont alimentés par de l'air prélevé au compresseur du générateur.

15. Procédé de fonctionnement de l'ensemble d'échappement selon la revendication précédente comprenant un prélèvement continu au compresseur du générateur.

16. Ensemble selon la revendication 8 ou 9 dont le flux principal est généré par deux générateurs de gaz, et comprenant un moyen d'orientation du vecteur de poussée produit par chacune des deux demi tuyères.

17. Turbomachine comportant un ensemble d'échappement selon l'une des revendications 1 à 14 et 16.

## Claims

1. A propulsion gas exhaust assembly, in an aircraft propelled by hot gases produced along the axis of the latter by a gas generator, comprising a duct and a nozzle, wherein said duct comprises a first cylindrical duct element (21) receiving the gases and commucating downstream with two second duct elements (22, 23), the directions of which are divergent in a first plane, each of the two duct elements communicating downstream with a third duct element (25, 27) which emerges in an axial gas-ejection hafl-nozzle (24, 26), **characterized by** the fact that at least one of the third ducts (25, 27) forms an elbow defined by a first part guiding the gas flow in a radial direction away from the axis and a second part downstream of the first that guides the gas flow in a radial direction toward the axis, in such a manner that the hot zones inside the duct upstream of the assembly are not visible from the rear.

2. The assembly as claimed in claim 1, at least one of the third ducts (25, 27) of which forms an elbow in a second plane.

3. The assembly as claimed in claim 2, the second plane of which is different from the first plane, especially perpendicular to it.

4. The assembly as claimed in claim 2 or 3, the two third ducts (25, 27) of which each form an elbow, the elbows having opposite directions to each other, especially in the vertical plane, one upward and the other downward.

5. The assembly as claimed in one of claims 1 to 4, the cross section of the third duct elements of which has an elongate shape in the horizontal direction.

6. The assembly as claimed in one of the preceding claims, the axes of the half-nozzles (24, 26) of which are in the same plane, parallel to the first plane.

7. The assembly as claimed in one of the preceding claims, the two second duct elements (22, 23) of which have semicylindrical entrances with a separation parallel to said first plane.

8. The assembly as claimed in one of the preceding claims, shaped so as to divide a main propulsion gas flow into a first and a second flow for an ejection into a first and a second half-nozzle and comprising at least one of the following two controlling means: a means of distributing the main flow into each of the two half-nozzles and a means of orienting the thrust vector produced by each of the two half-nozzles.

9. The assembly as claimed in the preceding claim, said two means of which are fluid-injection or mechanical means.

10. The assembly as claimed in one of claims 8 and 9, said half-nozzles of which are placed for a yaw orientation of the thrust vector.

11. The assembly as claimed in one of claims 8 and 9, said half-nozzles of which are arranged for a pitch or roll control.

12. The assembly as claimed in one of claims 10 and 11, comprising two pairs of half-nozzles, particularly one for the yaw orientation, the other for the pitch orientation.

13. The assembly as claimed in claim 8, the means for controlling the distribution of the flows of which comprises means for fluid injection at the throat of each of the half-nozzles.

14. The assembly as claimed in the preceding claim, the gas generator being a turbojet, the fluid injection means of which are supplied by the air tapped from the compressor of the generator.

15. A method of operating the exhaust assembly as claimed in the preceding claim comprising a continuous tapping from the compressor of the generator.

16. The assembly as claimed in claim 8 or 9, the main flow of which is generated by two gas generators, and comprising a means of orienting the thrust vector produced by each of the two half-nozzles.

17. A turbomachine comprising an exhaust assembly as claimed in one of claims 1 to 14 and 16.

## Patentansprüche

1. Ausstoßvorrichtung für die Antriebsgase bei einem Luftfahrzeug, das durch heiße Gase angetrieben wird, die auf dessen Achse durch einen Gasgenerator erzeugt werden, bestehend aus einer Leitung und einer Düse, wobei diese Leitung ein erstes, zylindrisches Leitungselement (21) umfasst, das die Gase aufnimmt und hinten mit zwei zweiten Leitungselementen (22, 23) in Verbindung steht, deren Verlaufrichtungen in einer ersten Ebene divergent sind, wobei jedes der zweiten Leitungselemente hinten mit einem dritten Leitungselement (25, 27) in Verbindung steht, das in eine axial liegende Halbdüse (24, 26) für den Gasausstoß mündet,
**dadurch gekennzeichnet,**
**dass** mindestens eine der dritten Leitungen (25, 27) einen Bogen macht, der von einem ersten Teil gebildet wird, welcher den Gasstrom in einer radialen, sich von der Achse entfernenden Richtung führt, und einem zweiten Teil hinter dem ersten Teil, welcher den Gasstrom in einer radialen Richtung auf die Achse zu führt, so dass die heißen Bereiche in der Leitung vor dieser Vorrichtung von hinten nicht zu sehen sind.

2. Vorrichtung nach Anspruch 1, bei der mindestens eine der dritten Leitungen (25, 27) einen Bogen in einer zweiten Ebene macht.

3. Vorrichtung nach Anspruch 2, bei der die zweite Ebene sich von der ersten Ebene unterscheidet, insbesondere im rechten Winkel zu dieser liegt.

4. Vorrichtung nach Anspruch 2 oder 3, bei der die beiden dritten Leitungen (25, 27) jeweils einen Bogen machen, wobei die Bögen in entgegen gesetzten Richtungen zueinander verlaufen, insbesondere in der vertikalen Ebene der eine nach oben und der andere nach unten.

5. Vorrichtung nach einem der Ansprüche 1 bis 4, wobei der Querschnitt der dritten Leitungselemente in horizontaler Richtung länglich geformt ist.

6. Vorrichtung nach einem der vorherigen Ansprüche, wobei die Achsen der beiden Halbdüsen (24, 26) sich in einer und derselben Ebene befinden, die parallel zur ersten Ebene liegt.

7. Vorrichtung nach einem der vorherigen Ansprüche, wobei die beiden zweiten Leitungselemente (22, 23) mit Eintritten in der Form von Halbzylindern mit einer Trennung parallel zu der genannten ersten Ebene ausgeführt sind.

8. Vorrichtung nach einem der vorherigen Ansprüche, die so ausgeführt ist, dass ein Haupt-Antriebsgasstrom in einen ersten und einen zweiten Strom unterteilt wird, um in einer ersten und einer zweiten Halbdüse ausgestoßen zu werden, und die mindestens eines der beiden folgenden Steuermittel enthält: Mittel zum Verteilen des Hauptstroms auf jede der beiden Halbdüsen und Mittel zur Ausrichtung des Vektors des von jeder der beiden Halbdüsen erzeugten Schubes.

9. Vorrichtung nach dem vorherigen Anspruch, wobei die genannten beiden Mittel mit Fluidik-Einspritzung (28, 29) oder mechanisch funktionieren.

10. Vorrichtung nach einem der Ansprüche 8 und 9, wobei die genannten Halbdüsen für eine Ausrichtung des Schubvektors in einer Schleife angeordnet sind.

11. Vorrichtung nach einem der Ansprüche 8 und 9, wobei die genannten Halbdüsen für eine Steuerung in einer Nickschwingbewegung oder in einer Rollbewegung angeordnet sind.

12. Vorrichtung nach den Ansprüchen 10 und 11, die zwei Paare von Halbdüsen aufweist, insbesondere das eine für die Ausrichtung in einer Schleife, das andere für die Ausrichtung in einer Nickschwingbewegung.

13. Vorrichtung nach Anspruch 8, wobei das Mittel zur Steuerung der Verteilung der Ströme Mittel (28) zum Einspritzen von Fluid in den Hals jeder der Halbdüsen umfasst.

14. Vorrichtung nach dem vorherigen Anspruch, wobei der Gasgenerator ein Turboluftstrahltriebwerk ist, dessen Fluidik-Einspritzmittel mit Luft gespeist werden, die am Verdichter des Generators entnommen wird.

15. Arbeitsverfahren der Ausstoßvorrichtung nach dem vorherigen Anspruch, das eine kontinuierliche Entnahme am Verdichter des Generators beinhaltet.

16. Vorrichtung nach Anspruch 8 oder 9, bei der der Hauptstrom von zwei Gasgeneratoren erzeugt wird, und die ein Mittel zur Ausrichtung des von jeder der beiden Halbdüsen erzeugten Schubvektors umfasst.

17. Turboluftstrahltriebwerk mit einer Ausstoßvorrichtung nach einem der Ansprüche 1 bis 14 und 16.
